# EUROPÄISCHE PATENTSCHRIFT

(11) **EP 4 624 140 B1**
(45) Veröffentlichungstag und Bekanntmachung des Hinweises auf die Patenterteilung: **09.09.2026**
(21) Anmeldenummer: 24166227.9
(22) Anmeldetag: 26.03.2024
(51) Int. Cl.: B29C 70/08, B29C 65/02, B29C 70/38, B29D 99/00, B32B 3/12, B32B 37/04, B32B 37/14, B29L 31/60

(54) **VERFAHREN ZUR HERSTELLUNG EINER THERMOPLASTISCHEN SANDWICHVERBUND-STRUKTUR**
METHOD FOR PRODUCING A THERMOPLASTIC SANDWICH COMPOSITE STRUCTURE
PROCÉDÉ DE FABRICATION D'UNE STRUCTURE COMPOSITE SANDWICH THERMOPLASTIQUE

(43) Veröffentlichungstag der Anmeldung: 01.10.2025
(73) Patentinhaber: Fraunhofer-Gesellschaft zur Förderung der angewandten Forschung e.V., 80686 München (DE)
(72) Erfinder: Feldmann, Maik, 06120 Halle (Saale) (DE); Zscheyge, Matthias, 06120 Halle (Saale) (DE); Schlimper, Ralf, 06120 Halle (Saale) (DE)
(74) Vertreter: Rösler, Uwe

(56) Entgegenhaltungen:
- US-A- 5 096 526
- US-A1- 2019 077 111

## Beschreibung

### Technisches Gebiet

Die Erfindung bezieht sich auf ein Verfahren zur Herstellung einer Sandwichverbund-Struktur, die wenigstens eine strukturierte Kernschicht, kurz SKS, aus thermoplastischem Material aufweist, die zwei sich gegenüberliegende Kernschichtoberflächen besitzt, die jeweils mittel- oder unmittelbar stoffschlüssig mit einer thermoplastischen Deckschicht verbunden sind.

Thermoplastische Sandwichverbund-Strukturen nehmen in den letzten Jahren an Bedeutung zu, da diese gegenüber Sandwichverbunden aus duroplastischen Materialien u.a. in Bezug auf ihre Recyclingfähigkeit vorteilhaft sind und überdies auch weitere Vorteile besitzen. Sandwichstrukturen bieten eine ausgezeichnete und werkstoffgerechte Bauweise, um Leichtbaustrukturen für kleine und große Stückzahlen für unterschiedlichste Anwendungsbereiche zu fertigen.

### Stand der Technik

Sandwichverbund-Strukturen finden im Leichtbau weit verbreitete Anwendung, da sie sehr hohe Flächenbelastungskennwerte bei zugleich geringer spezifischer Dichte aufweisen. Für hochbeanspruchte Strukturbauteile kommen in diesen Sandwichverbunden typischerweise strukturierte Kernschichten zum Einsatz, beispielsweise in Form einer Wabenstruktur, die beidseitig jeweils mit einer faserverstärkten Kunststoffdeckschicht verbunden ist.

Bei der Herstellung 3-dimensional geformter thermoplastischer Sandwichverbund-Strukturen kommen zunächst ebene, plattenförmige, vorzugsweise wabenförmig strukturierte Kernschichten aus thermoplastischem Material zum Einsatz, die mit oder ohne Deckschichten, die ihrerseits vorzugsweise aus faserverstärktem thermoplastischen Material bestehen, in Form von Halbzeugen einem Formgebungsprozess unterzogen werden, bei dem es darauf ankommt die Kernschicht möglichst strukturerhaltend in eine gewünschte Endform überzuführen.

Die Druckschrift DE 10 2011 006 819 A1 offenbart hierzu ein Verfahren zur Herstellung einer dreidimensional konturierten Sandwichstruktur, die aus zwei thermoplastischen Deckschichten und einer dazwischen liegenden Kernschicht mit Wabenstruktur besteht. Zum Zwecke einer dreidimensionalen Konturierung der Sandwichstruktur wird die wabenstrukturartige Kernschicht im Wege eines spanenden oder trennenden Bearbeitungsverfahrens zum Erreichen der angestrebten dreidimensionalen Kontur vorbearbeitet. Im Anschluss daran werden die thermoplastischen Deckschichten auf das bearbeitete Kernmaterial im Wege eines Heißpressvorganges stoffschlüssig mit der Kernschicht verbunden.

Die Druckschrift EP 1 993 808 B1 offenbart ein Verfahren zur Herstellung einer 3-dimensional geformten Sandwichstruktur, die zu Zwecken Ihrer Formgebung in eine Formpresse mit unterschiedlich nacheinander auslenkbaren Formpressstempeln überführt wird. Die der Sandwichstruktur innenliegende Kernschicht wird in unterschiedlichen Bereichen unterschiedlich stark komprimiert bis hin zur Ausbildung von Plisseefalten.

Die Druckschrift EP 0 894 611 B1 beschreibt ein Verfahren zum Herstellen eines Bauteils für Kraftfahrzeuge durch Pressen einer Platte umfassend wenigstens eine erste und zweite Deckschicht sowie einen dazwischenliegenden, zellenartigen Kern aus thermoplastischem Material, wobei beide Deckschichten aus verstärktem thermoplastischem Material gebildet sind. In Bereichen von Formbedingten Krümmungen werden zusätzliche Materialreservoirs geschaffen, die jeweils einer sich lokal ausbildenden Dickenabnahme entgegenwirken.

Die Druckschrift WO 2020/200796 A2 beschreibt ein Verfahren zur Herstellung eines Sandwichverbund-Bauteils mit eingepresster zwei- oder dreidimensionaler Form, das wenigstens eine strukturierte Kernschicht aus thermoplastischenm Material aufweist, die zwei sich gegenüberliegende Kernschichtoberflächen besitzt, die jeweils mittel- oder unmittelbar stoffschlüssig mit einer thermoplastischen Deckschicht verbunden sind. Ein mittels Infrarotstrahlung erwärmtes, eben ausgebildetes Sandwichhalbzeug wird mittels eines Presswerkzeuges vorgeformt und anschließend endgeformt. Zwischen der Vor- und Endformung erfolgt eine Stabilisierung des vorumgeformten Sandwichhalbzeuges mittels Kontaktkühlung. Die Druckschrift US 2019/077111 A1 beschreibt den Herstellungsprozess eines Sandwichbauteils.

Mit den bekannten Herstellungsverfahren zur Formgebung von Sandwichverbund-Strukturen sind jedoch Limitierungen in der Formenwahl sowie Einschränkungen in Bezug auf einen möglichst optimalen Faserverlauf in der endgeformten Sandwichverbund-Struktur sowie auch hinsichtlich deren Formtreue verbunden.

Insbesondere der Trend im Luftfahrtbereich zu thermoplastischen Werkstoffen, insb. der Verwendung von Hochtemperatur-Thermoplasten, erfordert neue Verfahren zur Herstellung komplexer Geometrien, da diese nur
bedingt durch Thermoformen verarbeitet werden können.

### Darstellung der Erfindung

Der Erfindung liegt die Aufgabe zugrunde, ein Verfahren zur Herstellung einer Sandwichverbund-Struktur, die wenigstens eine strukturierte Kernschicht, aus thermoplastischem Material aufweist mit zwei sich gegenüberliegenden Kernschichtoberflächen, die jeweils mittel- oder unmittelbar stoffschlüssig mit einer thermoplastischen Deckschicht verbunden sind, derart weiterzubilden, dass das realisierbare Formenspektrum zur Ausbildung von 3-dimensional endgeformten Sandwichverbund-Strukturen gegenüber den bisherigen Möglichkeiten erweitert werden soll. Insbesondere der Einsatz von Hochtemperatur Thermoplasten soll möglich werden, da diese mit den herkömmlichen Thermoformverfahren nur bedingt verarbeitet werden können. Zudem soll die Herstellung von faserverstärkten Sandwichverbund-Strukturen mit einem möglichst optimalen Faserverlauf innerhalb der Strukturbereiche ermöglicht werden, um so die Struktur-Belastbarkeit der derartiger Bauteile bei gleichzeitiger Gewichtreduzierung zu verbessern.

Die Lösung der der Erfindung zugrunde liegenden Aufgabe ist im Anspruch 1 angegeben. Den Erfindungsgedanken in vorteilhafter Weise weiterbildende Merkmale sind Gegenstand der Unteransprüche sowie der weiteren Beschreibung, insbesondere unter Bezugnahme auf das erläuterte Ausführungsbeispiel zu entnehmen.

Lösungsgemäß zeichnet sich das Verfahren zur Herstellung einer Sandwichverbund-Struktur, die wenigstens eine strukturierte Kernschicht aus thermoplastischem Material aufweist, die zwei sich gegenüberliegende Kernschichtoberflächen besitzt, die jeweils mittel- oder unmittelbar stoffschlüssig mit einer thermoplastischen Deckschicht verbunden sind, durch die nachfolgenden Verfahrensschritte aus:

Als Ausgangsprodukt dient eine aus thermoplastischem Material gefertigte strukturierte Kernschicht, typischerweise in Form eines plattenförmigen Werkstückes, das in an sich bekannter Weise in nahezu beliebigen Größen herstellbar ist, beispielsweise durch Verkleben von in einem Extrusionsverfahren hergestellten Röhrchen mit nachfolgendem Teilen bzw. Auftrennen in plattenförmige Stückgüter. Derartige strukturierte Kernschichten werden auch landläufig als Honeykombs bezeichnet. Selbstverständlich sind zur Herstellung derartiger strukturierter Kernschichten alternative Verfahrensweisen geeignet, bspw. generative Herstellungsverfahren etc..

In Abhängigkeit des gewählten thermoplastischen Materials, der Kernschichtdicke sowie auch der Wandstärke der waben- oder zylinderförmig ausgebildeten Strukturen ist die als Ausgangsprodukt vorliegende strukturierte Kernschicht plattenförmig steif oder mattenartig flexibel aber dennoch Struktur-erhaltend formbar.

In einem ersten Verfahrensschritt wird die strukturierte Kernschicht im Rahmen eines Drapiervorganges in eine definiert vorgegebene zwei- vorzugsweise dreidimensionale Form zum Erhalt einer sogenannten vorgeformten strukturierten Kernschicht überführt. Je nach Beschaffenheit der als Ausgangsprodukt bzw. in Form eines Halbzeuges vorliegenden strukturierten Kernschicht erfolgt das formgebende Drapieren vorzugsweise unter Verwendung eines Werkzeuges mit einer die Form bzw. die Endform der vorgeformten strukturierten Kernschicht bestimmenden Werkzeugoberfläche, an die die strukturierte Kernschicht unter Wärme- und/oder Druckapplikation flächig anliegend geschmiegt wird.

Handelt es sich bei dem Halbzeug um eine mattenartig flexible formbare, strukturierte Kernschicht, die über eine zumindest geringfügige Flächenverformbarkeit verfügt, so lässt sich diese durch bloßes Auflegen auf die Werkstückoberfläche und erforderlichenfalls durch sanftes oberflächliches Andrücken gegen die Werkstückoberfläche verformen. Der Verformungsvorgang lässt sich überdies unterstützen durch zusätzliche Wärmeapplikation, insbesondere in Fällen, in denen die strukturierte Kernschicht plattenförmig ausgebildet ist mit einer bei Raumtemperatur tendenziell größeren Flächensteifigkeit, so dass die thermoplastische strukturierte Kernschicht. Die Wärmeapplikation erfolgt vorzugsweise mittels kontaktloser Infrarotstrahlung bis die thermoplastische Erweichungstemperatur des thermoplastischen Materials der strukturierten Kernschicht erreicht wird, so dass sie Struktur-erhaltend verformbar ist und sich der durch die Werkstückoberfläche vorgegebenen dreidimensionalen Raumform durch flächiges Anschmiegen anpasst. Dabei ist zu beachten, dass die den Drapiervorgang unterstützende Wärmeapplikation auf die strukturierte Kernschicht schonend in der Weise einwirkt, dass nach Durchführung des formgebenden Drapiervorganges die strukturierte Kernschicht Struktur-erhaltend verformt ist.

Vorzugsweise wird der Vorgang des Drapierens der strukturierten Kernschicht auf die formgebende Werkzeugoberfläche durch eine Druckapplikation unterstützt. Die Druckapplikation erfolgt vorzugsweise mit Hilfe eines stempelartig oder rollenartig ausgebildeten Werkzeuges, das unter schonender und vorzugsweise flächiger Druckeinwirkung auf die frei zugängliche Kernschichtoberfläche in Kontakt gebracht wird, wobei das Werkzeug durch sanfte Druckapplikation vorzugsweise über die gesamte frei zugängliche Kernschichtoberfläche gerollt oder im Wege eines stempelartigen Versatzvorganges mit dieser in Berührung tritt.

Alternativ oder in Kombination mit der vorstehenden Druckapplikation sieht eine weitere bevorzugte Verfahrensvariante die Applikation von Unterdruck zwischen der formbestimmenden Werkzeugoberfläche und der zu verformenden strukturierten Kernschicht vor, wodurch die strukturierte Kernschicht ganzflächig an die formgebende Werkzeugoberfläche regelrecht angesaugt wird. In diesem Fall ist es vorteilhaft, wenn die strukturierte Kernschicht oberflächig mit einer dünnen thermoplastischen Folie bedeckt ist, vorzugsweise stoffschlüssig verbunden ist.

Nach Abschluss des formgebenden Drapierens der strukturierten Kernschicht zum Erhalt einer vorgeformten strukturierten Kernschicht, erfolgt das Ausbilden einer thermoplastischen Deckschicht auf einer der beiden Kernschichtoberflächen der vorgeformten strukturierten Kernschicht mittels eines längs der Kernschichtoberfläche räumlich und dynamisch geführten und lokal begrenzten Bearbeitungsprozesses, bei dem das thermoplastische Material der Kernschichtoberfläche der vorgeformten strukturierten Kernschicht lokal erwärmt und ein bandförmiges thermoplastisches Material auf die lokal erwärmte Kernschichtoberfläche der vorgeformten strukturierten Kernschicht unter Ausbildung einer Stoffschlussverbindung aufgebracht werden.

In einer weiteren Ausführungsvariante für den Formvorgang zum Erhalt der vorgeformten strukturierten Kernschicht bietet es sich an, ein Werkzeug mit einer aus einem Wandlerwerkstroff gefertigten Werkzeugoberfläche zu verwenden, bspw. aus einem Formgedächtniswerkstoff, der bei Temperaturänderung eine ihm eingeprägte Raumform einnimmt. Folgender formgebender Ablauf wäre folglich möglich: Die strukturierte Kernschicht wird zunächst eben auf die Werkzeugoberfläche aus einem Formgedächtniswerkstoff aufgelegt und dort flächig fixiert, bspw. durch Klemmung, Unterdruckapplikation etc.. Nach Aktivierung des Wandlerwerkstoffes, bspw. durch Temperaturänderung etc. nimmt das Werkzeug die gewünschte Werkzeugoberflächenform in der finale Endform an, die sich automatisch auf die Kernschicht überträgt.

Zur Ausbildung bzw. Schaffung der thermoplastischen Deckschicht auf jeweils einer der beiden Kernschichtoberflächen der vorgeformten strukturierten Kernschicht wird ein Tapeleger verwendet, der relativ zur vorgeformten strukturierten Kernschicht vorzugsweise räumlich frei positionierbar gelagert ist. Tapeleger stellen Werkzeugköpfe dar, die zu ihrer freien Positionierung typischerweise an einem Manipulator-Ende eines Industrieroboters angebracht sind und sogenannte Tapes, vorzugsweise aus einem faserverstärktem thermoplastischem Material in Form einzelner Tapebahnen auf einer Substratoberfläche, hier auf der Kernschichtoberfläche, lokal ablegen bzw. drucken. Für die Ausbildung einer großflächigen, faserverstärkten thermoplastischen Deckschicht erfolgt die Tapeablage typischerweise in parallel nebeneinander auszubildenden Bahnen, die sich auf Stoß berühren oder sich gegenseitig teilweise überlappen, wobei das auf die Kernschichtoberfläche jeweils bahnförmige thermoplastische faserverstärkte Material über dessen Schmelztemperatur erwärmt wird. Ein an sich bekannter Tapeleger ist beispielsweise in der Druckschrift DE 10 2007 009 124 A1 beschrieben.

In vorteilhafter Weise wird zur Ausbildung der auf der vorgeformten strukturierten Kernschicht auszubildenden thermoplastischen Deckschicht ein als Meterware vorliegendes bandförmiges thermoplastisches, faserverstärktes Material eingesetzt, das über Struktur-verstärkende Faserbestandteile, vorzugsweise in Form von Endlosfasern, verfügt, die längs des als Meterware vorliegenden bandförmigen thermoplastischen Materials angeordnet sind. Vorzugsweise werden das bandförmige thermoplastische Material sowie die Kernschichtoberfläche auf die der Aufbring- bzw. Aufdruckvorgang stattfindet, lokal derart erwärmt, so dass sich beim Aufbringen das bandförmige thermoplastische Material und die lokal erwärmte Kernschichtoberfläche stoffschlüssig verbinden. Vorzugsweise verfügt das bandförmige thermoplastische Material über einen niedrigeren Schmelzpunkt als das thermoplastische Material der strukturierten Kernschicht, so dass das Aufbringen bzw. Aufdrucken der Deckschicht mittels des Tapelegers in schonender und Strukturerhaltender Weise auf die vorgeformte strukturierte Kernschicht unter Ausbildung einer Stoffschlussverbindung erfolgen kann.

Insbesondere das Erwärmen der Kernschichtoberfläche wird oberflächennah mit einer geringen thermischen Tiefenwirkung durchgeführt, so dass das thermoplastische Material der vorgeformten strukturierten Kernschicht ansonsten unterhalb der Schmelztemperatur verbleibt, wodurch während der Deckschichtaufbringung keinerlei oder lediglich vernachlässigbare Strukturverformungen auftreten.

Durch die nur geringe in die Kernschichtoberfläche hinreichende thermische Tiefenwirkung kühlen die erwärmten Fügebereiche unmittelbar nach dem Fügevorgang jeweils unter die Schmelztemperatur ab, so dass der Fügebereich unmittelbar nach dem Tapelegen direkt final konsolidieren, so dass möglichst keine weitere Konsolidierung erforderlich ist. Über die gezielte Wärmeeinbringung und Insitu-Konsolidierung ist auch ein direkter Randverschluss sowie das Einbringen von Verschraubungs- und Fixierpunkten durch lokale, vollständige Konsolidierung, beispielsweise durch Erhöhen des Druckes oder der Temperatur direkt möglich.

In einer bevorzugten Ausführungsform werden das bandförmige thermoplastische Material sowie die Kernschichtoberfläche mit einer gemeinsamen Wärmequelle unmittelbar vor Aufbringen des bandförmigen thermoplastischen Materials auf die Kernschichtoberfläche lokal, vorzugsweise kontaktlos erwärmt. Die kontaktlose Erwärmung erfolgt vorzugsweise mit Hilfe einer Infrarot-Strahlungsquelle, eines Gasbrenners oder eines Lasers, die bzw. der am Werkzeugkopf des Tapelegers angebracht ist.

Nach Fertigstellung der thermoplastischen, faserverstärkten Deckschicht auf einer der beiden Kernschichtoberflächen der vorgeformten strukturierten Kernschicht erfolgt die Ausbildung der anderen der beiden thermoplastischen Deckschichten auf der gegenüberliegenden Kernschichtoberfläche der vorgeformten strukturierten Kernschicht unter Anwendung des gleichen Bearbeitungsprozesses, mit dem bereits die erste thermoplastische Deckschicht auf die vorgeformte strukturierte Kernschicht aufgebracht worden ist. Dies setzt allerdings voraus, dass die auf der formgebenden Werkzeugoberfläche aufliegende vorgeformte strukturierte Kernschicht von dieser entnommen werden muss, um einen freien Zugang für den Tapeleger zu dieser Kernschichtoberfläche zu ermöglichen. Vorzugsweise ist das Bauteil bereits so steif, so dass keine weitere Unterstützungsform erforderlich ist.

Die einseitig auf der vorgeformten strukturierten Kernschicht bereits aufgebrachte und stoffschlüssig mit dieser verbundene, ersten Deckschicht vermag die vorgeformte strukturierte Kernschicht formerhaltend zu stabilisieren und trägt zur Erhöhung ihrer Formsteifigkeit bei, so dass die Handhabung und weiterte Prozessierung der vorgeformten strukturierten Kernschicht zumindest erleichtert wird.

Zur Aufbringung der weiteren thermoplastischen Deckschicht auf die noch unprozessierte freie Kernschichtoberfläche wird die so vorkonfektionierte vorgeformte strukturierte Kernschicht beispielsweise mit einem Greifersystem lediglich randseitig fixiert und in eine Position überführt, in der die noch unprozessierte Kernschichtoberfläche für den nachfolgenden Bearbeitungsprozess frei zugänglich wird.

Alternativ oder in Kombination bietet es sich an, die mit einer Deckschicht einseitig gefügte, vorgeformte strukturierte Kernschicht auf einem weiteren Werkzeug formerhaltend abzulegen bzw. zu fixieren, bspw. mittels Klemmen, Einspannen oder Unterdruck, wobei die Deckschicht der vorgeformten strukturierten Kernschicht dem Werkzeug unmittelbar zugewandt orientiert ist.

In gleicher Weise, mit der die erste Deckschicht auf die vorgeformte Kernschicht aufgebracht wird, erfolgt auch die Ausbildung der zweiten Deckschicht mit Hilfe eines Tapelegers, der auf die freie Kernschichtoberfläche bandförmiges thermoplastisches Material, das vorzugsweise durch Endlosfasern faserverstärkt ist, aufzubringen vermag. Die jeweils bahnförmig nebeneinander zu applizierenden thermoplastischen Materialbahnen werden mit Hilfe des Tapelegers in einem über die Schmelztemperatur des bandförmigen thermoplastischen Materials erwärmten Zustandes auf die ebenfalls zumindest an der Kernschichtoberfläche über die Schmelztemperatur erwärmten thermoplastischen Materials aufgebracht, so dass sich das faserverstärkte bandförmige thermoplastische Material mit der vorgeformten strukturierten Kernschicht stoffschlüssig verbindet.

Durch die freie Positionierbarkeit des Tapelegers kann der gesamte Oberflächenbereich der vorgeformten strukturierten Kernschicht mit dem faserverstärkten thermoplastischen Material gefügt werden. Hierzu wird der Tapeleger konturgetreu über die vorgeformte frei zugängliche Kernschichtoberfläche geführt, wobei das auf die Kernschichtoberfläche applizierte faserverstärkte bahnförmig ausgebildete thermoplastische Material vermittels eines vorgebbaren Anpressdruckes sowie unter Vorgabe eines bestimmten Faserverlaufes oder einer bestimmten Faserorientierung auf der Kernschichtoberfläche appliziert wird.

In einer weiteren bevorzugten Ausführungsform wird jeweils vor dem Aufbringen bzw. Abscheiden des bahnförmig thermoplastischen Materials mit Hilfe des Tapelegers auf die Kernschichtoberfläche der vorgeformten strukturierten Kernschicht jeweils zur Ausbildung einer Deckschicht eine thermoplastische Folie aufgebracht, deren Schmelztemperatur vorzugsweise geringer ist als die Schmelztemperatur der strukturierten Kernschicht. Die thermoplastische Folie unterstützt die Strukturerhaltung der strukturierten Kernschicht bei und während der Aufbringung der Deckschicht mit Hilfe des Tapelegers und unterstützt überdies die stoffschlüssige Verbindung zwischen der sich ausbildenden Deckschicht und der jeweils mit der Deckschicht zu versehenen Kernschichtoberfläche.

Das lösungsgemäße Verfahren ermöglicht im Wege einer freien Drapierung einer strukturierten Kernschicht zum Erhalt einer vorgeformten strukturierten Kernschicht sowie einer nachfolgenden Belegung der beiden Kernschichtoberflächen mit einer Deckschicht mit Hilfe eines Tapelegers, der räumlich frei positionierbar ist und zur Herstellung jeweils einer Deckschicht bahnförmiges, thermoplastisches Material in thermisch erweichter Form zur Verfügung zu stellen, die Herstellung passgenauer Sandwichstrukturen mit hoher Designfreiheit sowie der Möglichkeit weiterer Funktionenintegrationen. Besonders vorteilhaft ist das Verfahren für Bauteile in kleineren und mittleren Stückzahlen, die überdies mit zusätzlich lokalen Endlosfasern verstärkt bzw. versehen werden können.

Beim Drapieren der thermoplastischen strukturierten Kernschicht gilt es darauf zu achten, die Kernschichtstruktur durch die Formgebung in eine gewünschte dreidimensionale Form nicht zu beeinträchtigen. Unterstützend für den Drapiervorgang gilt es, die strukturierte Kernschicht über ihre thermoplastische Erweichungstemperatur zu erwärmen jedoch deutlich unter der Schmelztemperatur zu halten. Auf diese Weise kann die strukturierte Kernschicht beispielsweise unter Zuhilfenahme eines formgebenden Werkzeuges mit einer formgebenden Werkzeugoberfläche definiert geformt werden.

In sequentieller Abfolge werden die beiden Kernschichtoberflächen der vorgeformten strukturierten Kernschicht vollständig mit jeweils einer aus thermoplastischem Material bestehenden Deckschicht im Rahmen eines Tapelege-Vorganges belegt bzw. bedruckt. Der für die Ausbildung der Deckschicht zum Einsatz kommende Tapeleger stellt ein über die Schmelztemperatur erhitztes bandförmiges thermoplastisches Material zur Verfügung und bringt dieses unter Druckapplikation auf die freie Kernschichtoberfläche lokal aus. Um die gesamte Kernschichtoberfläche jeweils einlagig mit dem bahnförmig thermoplastischen Material zu belegen bzw. zu bedrucken, wird der Tapeleger bahnförmig über die gesamte Kernschichtoberfläche geführt. Eben diese Vorgehensweise zur Ausbildung einer Deckschicht durch lokales Ausbringen eines bahnförmig thermoplastisch erweichten Materials ermöglicht den Einsatz von Hochtemperaturthermoplaste, da nur lokal erhitzt werden muss, wohingegen andere bekannte Verfahren mit globaler Erwärmung des gesamten Bauteils nur sehr enge Prozessfenster besitzen oder aber gewünschte Formen nicht herstellbar sind. So ermöglicht das lösungsgemäße Verfahren durch ein gezieltes Temperaturmanagement, d.h. durch einen ortsbezogenen und auf die Materialwahl für die Deckschichten sowie die Kernschicht abgestimmten Energieeintrag eine formgebende Herstellung dreidimensionaler Sandwichstrukturen vergleichbar mit einer generativen Herstellungsweise.

### Kurze Beschreibung der Erfindung

Die Erfindung wird nachstehend anhand eines Ausführungsbeispiels unter Bezugnahme auf die Zeichnungen exemplarisch beschrieben. Es zeigen:

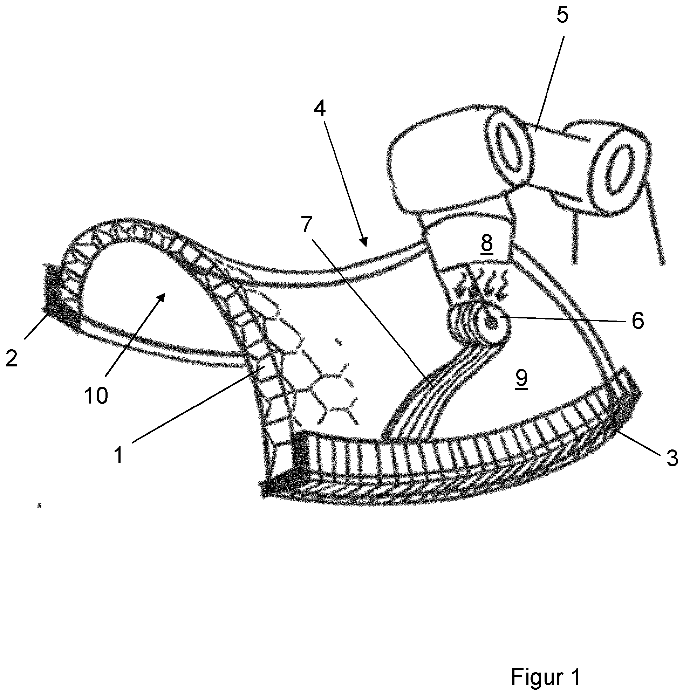

- Fig. 1: schematisierte Darstellung einer vorgeformten strukturierten Kernschicht mit einseitiger Belegung eines bahnförmig thermoplastischen Materials mit Hilfe eines Tapelegers.

### Wege zur Ausführung der Erfindung, gewerbliche Verwendbarkeit

Figur 1 stellt eine schematisierte Darstellung einer vorgeformten strukturierten Kernschicht 1 dar, die eine wabenförmige Kernschichtstruktur aufweist und bereits in eine dreidimensionale Form überführt worden ist. Die vorgeformte strukturierte Kernschicht 1 wird im dargestellten Fall zwischen zwei Randleisten 2, 3 räumlich fixiert, wobei die der Zeichenebene zugewandte Kernschichtoberfläche 4 frei zugänglich positioniert ist.

An einem räumlich frei schwenkbaren Industrieroboter 5 ist endseitig ein Tapeleger 6 angebracht, der zur Aufbringung eines faserverstärkten bandförmigen thermoplastischen Materials 7 auf die Kernschichtoberfläche 4 ausgebildet ist. Der Tapeleger 6 vermag das auf die Kernschichtoberfläche 4 aufzubringende bandförmige, faserverstärkte thermoplastische Material 7 unter Druckapplikation sowie lokaler Wärmeeinwirkung auf die Kernschichtoberfläche 4 zu applizieren. Hierzu ist am Tapeleger 6 zusätzlich eine Wärmequelle 8, vorzugsweise in Form einer IR-Strahlungsquelle 8 angebracht, die sowohl das bandförmige, faserverstärkte thermoplastische Material 7 als auch Randbereiche der thermoplastischen Kernschichtoberfläche 4 derart zu erwärmen vermag, so dass sich eine stoffschlüssige Verbindung zwischen dem bandförmigen, faserverstärkten thermoplastischen Material 7 und der lokal über die Schmelztemperatur erwärmte Kernschichtoberfläche 4 einstellt. Der Temperatureintrag ist jedoch so zu wählen, dass sich unmittelbar nach Ausbildung der Stoffschlussverbindung diese sich zwischen der Kernschichtoberfläche und der Deckschicht 9 konsolidiert, d.h. verfestigt. Hierzu sind der Wärmeeintrag, die Druckapplikation des Tapelegers sowie dessen Bewegungsgeschwindigkeit geeignet aufeinander abzustimmen. Bedarfsweise kann die Deckschicht 9 durch wiederholtes Überfahren des aufgebrachten bandförmigen, faserverstärkten thermoplastischen Materials 7 mehrschichtig ausgebildet werden.

Nach Fertigstellung einer Deckschicht gilt es, die in Figur 1 illustrierte vorgeformte strukturierte Kernschicht aus den Randleisten 2, 3 zu entnehmen und die gegenüberliegende freie Kernschichtoberfläche 10 mit Hilfe des Tapelegers 6 in der gleichen Weise mit einer typischerweise vollflächig durchgängigen Deckschicht zu belegen.

### Bezugszeichenliste

- 1: vorgeformte strukturierte Kernschicht
- 2, 3: Randleisten
- 4: Kernschichtoberfläche
- 5: Industrieroboter
- 6: Tapeleger
- 7: bahnförmiges, faserverstärktes thermoplastisches Material
- 8: Wärmequelle
- 9: Deckschicht
- 10: Kernschichtoberfläche

## Patentansprüche

1. Verfahren zur Herstellung einer Sandwichverbund-Struktur, die wenigstens eine strukturierte Kernschicht (1), kurz SKS, aus thermoplastischem Material aufweist, die zwei sich gegenüberliegende Kernschichtoberflächen (4) besitzt, die jeweils mittel- oder unmittelbar stoffschlüssig mit einer thermoplastischen Deckschicht (9) verbunden sind,
umfassend die folgenden Verfahrensschritte:
a) Drapieren der SKS zum Erhalt einer in einer vorgegebenen 2- oder 3-dimensionalen Form vorgeformten strukturierten Kernschicht, kurz vSKS,
b) Ausbilden einer der beiden thermoplastischen Deckschichten (9) auf einer der beiden Kernschichtoberflächen (4, 10) der vSKS mittels eines längs der Kernschichtoberfläche räumlich und dynamisch geführten und lokal begrenzten Bearbeitungsprozesses, bei dem das thermoplastische Material der Kernschichtoberfläche der vSKS lokal erwärmt und ein bandförmiges thermoplastisches Material (7) auf die lokal erwärmte Kernschichtoberfläche der vSKS unter Ausbildung einer Stoffschlussverbindung aufgebracht werden, sowie
c) Ausbilden der anderen der beiden thermoplastischen Deckschichten (9) auf der anderen der beiden Kernschichtoberfläche (4, 10) der vSKS unter Anwendung des Bearbeitungsprozesses wie unter b).

2. Verfahren nach Anspruch 1,
**dadurch gekennzeichnet, dass** die SKS eine waben- oder zylinderartige Strukturierung aufweist, die beim Drapieren erhalten bleibt.

3. Verfahren nach Anspruch 1 oder 2,
**dadurch gekennzeichnet, dass** das jeweils die Deckschichten ausbildende bandförmige thermoplastische Material über einen niedrigeren Schmelzpunkt verfügt als das thermoplastische Material der SKS oder dem thermoplastischen Material der SKS entspricht.

4. Verfahren nach einem der Ansprüche 1 bis 3,
**dadurch gekennzeichnet, dass** dem bandförmigen thermoplastischen Material strukturverstärkende Faserbestandteile zugesetzt sind.

5. Verfahren nach Anspruch 4,
**dadurch gekennzeichnet, dass** die strukturverstärkenden Faserbestandteile als Endlosfasern ausgebildet sind, die längs des bandförmigen thermoplastischen Materials angeordnet sind.

6. Verfahren nach einem der Ansprüche 1 bis 5,
**dadurch gekennzeichnet, dass** das Drapieren der SKS unter Verwendung eines Werkzeuges mit einer die Form der vSKS bestimmenden Werkzeugoberfläche erfolgt, an die die SKS unter Wärme- und/oder Druckapplikation flächig anliegend geschmiegt wird.

7. Verfahren nach Anspruch 6,
**dadurch gekennzeichnet, dass** durch die Wärmeapplikation die gesamte SKS auf oder über eine dem thermoplastischen Material der SKS zu eigene Erweichungstemperaturk erwärmt wird, die jedoch unter der Schmelztemperatur des thermoplastischen Materials der KS liegt.

8. Verfahren nach Anspruch 6 oder 7,
**dadurch gekennzeichnet, dass** die Druckapplikation im Wege eines die SKS einseitig auf die Werkzeugoberfläche schmiegenden Flächendruckes und/oder eines die SKS mittels eines zwischen der Werkzeugoberfläche und der SKS applizierten Unterdruckes erfolgt.

9. Verfahren nach einem der Ansprüche 1 bis 8,
**dadurch gekennzeichnet, dass** das Ausbilden jeweils einer der thermoplastischen Deckschichten auf einer der beiden Kernschichtoberflächen der vSKS mittels eines Tapelegers erfolgt, der relativ zur vSKS räumlich frei positionierbar ist.

10. Verfahren nach einem der Ansprüche 1 bis 9,
**dadurch gekennzeichnet, dass** das bandförmige thermoplastische Material als Meterware vorliegt und unmittelbar vor Aufbringen auf die lokal erwärmte Kernschichtoberfläche derart erwärmt wird, sodass sich beim Aufbringen das bandförmige thermoplastische Material und die lokal erwärmte Kernschichtoberfläche stoffschlüssig verbinden.

11. Verfahren nach einem der Ansprüche 1 bis 10,
**dadurch gekennzeichnet, dass** das bandförmige thermoplastische Material und die Kernschichtoberfläche mit einer Wärmequelle unmittelbar vor Aufbringen des bandförmigen thermoplastischen Materials auf die Kernschichtoberfläche lokal erwärmt werden.

12. Verfahren nach Anspruch 11,
**dadurch gekennzeichnet, dass** als Wärmequelle eine kontaktfreie Wärmequelle in Form einer IR-Strahlungsquelle, Laser oder Gasheizung verwendet wird.

13. Verfahren nach einem der Ansprüche 1 bis 12,
**dadurch gekennzeichnet, dass** nach dem Ausbilden der einen der beiden thermoplastischen Deckschichten die mit der einen thermoplastischen Deckschicht verbundene vSKS in eine Position überführt wird, in der die andere der beiden Kernschichtoberflächen für den Bearbeitungsprozess frei zugänglich wird.

14. Verfahren nach Anspruch 13,
**dadurch gekennzeichnet, dass** das vSKS in der überführten Position auf dem oder einem weiteren Werkzeug formerhaltend abgelegt und gelagert wird, wobei die Deckschicht der vSKS dem Werkzeug zugewandt ist.

15. Verfahren nach einem der Ansprüche 1 bis 14,
**dadurch gekennzeichnet, dass** unmittelbar auf beiden Kernschichtoberflächen der SKS eine thermoplastische Folie aufgebracht wird, auf der nachfolgend jeweils die Deckschicht aufgebracht wird.

16. Verfahren nach Anspruch 15,
**dadurch gekennzeichnet, dass** die thermoplastische Folie eine Schmelztemperatur aufweist, die unter der Schmelztemperatur der SKS liegt.

17. Verfahren nach einem der Ansprüche 6 bis 16,
**dadurch gekennzeichnet, dass** die strukturierte Kernschicht eben auf die Werkzeugoberfläche aus einem Wandlerwerkstoff aufgelegt und dort flächig fixiert wird, und
dass der Wandlerwerkstoff aktiviert wird und das Werkzeug eine Werkzeugoberflächenform annimmt, die einer Endform entspricht, die sich auf die Kernschicht überträgt.

## Claims

1. A method for manufacturing a sandwich composite structure comprising at least one structured core layer (1), hereinafter referred to as SKS, made of thermoplastic material, which has two opposing core layer surfaces (4), each of which is directly or indirectly bonded to a thermoplastic cover layer (9),
comprising the following process steps:
a) Draping the SKS to obtain a structured core layer preformed into a predetermined 2- or 3-dimensional shape, hereinafter referred to as vSKS,
b) forming one of the two thermoplastic cover layers (9) on one of the two core layer surfaces (4, 10) of the vSKS by means of a processing method that is spatially and dynamically guided along the core layer surface and is locally limited, in which the thermoplastic material (7) of the core layer surface of the vSKS is locally heated and a strip-shaped thermoplastic material is applied to the locally heated core layer surface of the vSKS to form a bond, and
c) forming the other of the two thermoplastic cover layers (9) on the other of the two core layer surfaces (4, 10) of the vSKS using the processing method as described in b).

2. A method according to claim 1,
**characterized in that** the SKS has a honeycomb- or cylinder-like structure that is retained during draping.

3. The method according to claim 1 or 2,
**characterized in that** the strip-shaped thermoplastic material forming the respective cover layers has a lower melting point than the thermoplastic material of the SKS or corresponds to the thermoplastic material of the SKS.

4. A method according to any one of claims 1 to 3,
**characterized in that** structure-reinforcing fiber components are added to the strip-shaped thermoplastic material.

5. A method according to claim 4,
**characterized in that** the structure-reinforcing fiber components are formed as continuous fibers arranged along the length of the strip-shaped thermoplastic material.

6. A method according to any one of claims 1 to 5,
**characterized in that** the draping of the SKS is performed using a tool having a tool surface that determines the shape of the vSKS, to which the SKS is conformed in a flat, flush manner under the application of heat and/or pressure.

7. The method according to claim 6,
**characterized in that** the heat application heats the entire SKS to or above a softening temperature inherent to the thermoplastic material of the SKS, which, however, is below the melting temperature of the thermoplastic material of the KS.

8. A method according to claim 6 or 7,
**characterized in that** the pressure is applied by means of a surface pressure that presses the SKS against one side of the mold surface and/or by means of a vacuum applied between the mold surface and the SKS.

9. A method according to any one of claims 1 to 8,
**characterized in that** the formation of one of the thermoplastic cover layers on one of the two core layer surfaces of the vSKS is carried out by means of a tape applicator that can be freely positioned spatially relative to the vSKS.

10. A method according to any one of claims 1 to 9,
**characterized in that** the strip-shaped thermoplastic material is supplied in roll form and is heated immediately prior to application to the locally heated core layer surface in such a way that, upon application, the strip-shaped thermoplastic material and the locally heated core layer surface bond together by interlocking of the materials.

11. A method according to any one of claims 1 to 10,
**characterized in that** the strip-shaped thermoplastic material and the core layer surface are locally heated with a heat source immediately prior to application of the strip-shaped thermoplastic material to the core layer surface.

12. A method according to claim 11,
**characterized in that** a contactless heat source in the form of an IR radiation source, laser, or gas heater is used as the heat source.

13. A method according to any one of claims 1 to 12,
**characterized in that**, after forming one of the two thermoplastic cover layers, the vSKS bonded to said one thermoplastic cover layer is moved to a position in which the other of the two core layer surfaces becomes freely accessible for the processing step.

14. A method according to claim 13,
**characterized in that** the vSKS is placed and held in the transferred position on the tool or another tool in a manner that preserves its shape, with the cover layer of the vSKS facing the tool.

15. A method according to any one of claims 1 to 14,
**characterized in that** a thermoplastic film is applied directly to both core layer surfaces of the SKS, onto which the cover layer is subsequently applied in each case.

16. A method according to claim 15,
**characterized in that** the thermoplastic film has a melting temperature that is lower than the melting temperature of the SKS.

17. A method according to any one of claims 6 through 16,
**characterized in that** the structured core layer is placed flat on the mold surface made of a transducer material and fixed there over its entire surface, and
that the converter material is activated and the tool assumes a surface shape corresponding to a final shape that is transferred to the core layer.

## Revendications

1. Procédé de fabrication d'une structure composite sandwich qui présente au moins une couche centrale structurée (1), abrégée SKS, en matériau thermoplastique, qui possède deux surfaces de couche centrale opposées (4), qui sont respectivement liées directement ou indirectement par conjonction de matière à une couche de recouvrement thermoplastique (9), comprenant les étapes de procédé suivantes :
a) le drapage de la SKS pour obtenir une couche centrale structurée préformée selon une forme prédéterminée en 2 ou 3 dimensions, abrégée vSKS,
b) la formation d'une des deux couches de recouvrement thermoplastiques (9) sur une des deux surfaces de couche centrale (4, 10) de la vSKS au moyen d'un processus d'usinage spatialement et dynamiquement guidé et localement limité le long de la surface de couche centrale, dans lequel le matériau thermoplastique de la surface de couche centrale de la vSKS chauffée localement et un matériau thermoplastique en forme de ruban (7) sont appliqués sur la surface de couche centrale de la vSKS chauffée localement, en formant ainsi une liaison par conjonction de matière ainsi que
c) la formation de l'autre des deux couches de recouvrement thermoplastique (9) sur l'autre des deux surfaces de couche centrale (4,10) de la vSKS en utilisant le processus d'usinage décrit en b).

2. Procédé selon la revendication 1, **caractérisé en ce que** la SKS présente une structure alvéolaire ou cylindrique qui est conservée lors du drapage.

3. Procédé selon la revendication 1 ou 2, **caractérisé en ce que** le matériau thermoplastique en forme de ruban constituant respectivement les couches de recouvrement a un point de fusion inférieur à celui du matériau thermoplastique de la SKS ou correspond au matériau thermoplastique de la SKS.

4. Procédé selon une des revendications 1 à 3, **caractérisé en ce que** des composants de fibres de renforcement structurel sont ajoutés au matériau thermoplastique en forme de ruban.

5. Procédé selon la revendication 4, **caractérisé en ce que** les composants de fibres de renforcement structurel sont des fibres continues, qui sont disposées sur toute la longueur du matériau thermoplastique en forme de ruban.

6. Procédé selon une des revendications 1 à 5, **caractérisé en ce que** la SKS est drapée en utilisant un outil dont une surface d'outil détermine la forme de la vSKS, contre laquelle la SKS est pressée à plat sous l'effet de la chaleur et/ou de la pression.

7. Procédé selon la revendication 6, **caractérisé en ce que** la totalité de la SKS est chauffée à une température supérieure ou égale à une température de ramollissement inhérente au matériau thermoplastique de la SKS, mais inférieure à la température de fusion du matériau thermoplastique de la KS.

8. Procédé selon la revendication 6 ou 7, **caractérisé en ce que** l'application de la pression est réalisée au cours d'une impression de surface qui épouse la forme de la SKS sur la surface d'outil sur une face et/ou par application d'un vide entre la surface de l'outil et la SKS.

9. Procédé selon une des revendications 1 à 8, **caractérisé en ce que** la formation de respectivement une des couches de recouvrement thermoplastique sur une des deux surfaces de couche centrale de la vSKS est réalisée au moyen d'un applicateur de ruban, qui peut être positionné spatialement librement par rapport à la vSKS.

10. Procédé selon une des revendications 1 à 9, **caractérisé en ce que** le matériau thermoplastique en forme de ruban est fourni en longueurs d'un mètre et est chauffé immédiatement avant l'application sur la surface de couche centrale chauffée localement, de telle sorte que le matériau thermoplastique en forme de ruban et la surface de couche centrale chauffée localement adhèrent par conjonction de matière pendant l'application.

11. Procédé selon une des revendications 1 à 10, **caractérisé en ce que** le matériau thermoplastique en forme de ruban et la surface de couche centrale sont chauffés localement par une source de chaleur immédiatement avant l'application du matériau thermoplastique en forme de ruban sur la surface de couche centrale.

12. Procédé selon la revendication 11, **caractérisé en ce qu'**une source de chaleur sans contact, telle qu'une source de rayonnement infrarouge, un laser ou un élément chauffant à gaz, est utilisée comme source de chaleur.

13. Procédé selon une des revendications 1 à 12, **caractérisé en ce que**, après la formation d'une des deux couches de recouvrement thermoplastiques, la vSKS liée à une des couches de recouvrement thermoplastique est déplacée vers une position, dans laquelle l'autre des deux surfaces de couche centrale est accessible librement pour le processus d'usinage.

14. Procédé selon la revendication 13, **caractérisé en ce que** la vSKS est placée et stockée dans la position déplacée sur l'outil ou un autre outil de manière à préserver sa forme, dans lequel la couche de recouvrement de la vSKS est tournée vers l'outil.

15. Procédé selon une des revendications 1 à 14, **caractérisé en ce qu'**un film thermoplastique est appliqué directement sur les deux surfaces de couche centrale de la SKS, sur lequel on applique ensuite la couche de recouvrement.

16. Procédé selon la revendication 15, **caractérisé en ce que** le film thermoplastique a une température de fusion, qui est inférieure à la température de fusion de la SKS.

17. Procédé selon une des revendications 6 à 16, **caractérisé en ce que** la couche centrale structurée est déposée à plat sur la surface d'outil, constituée d'un matériau de conversion, et y est fixée à plat et que le matériau de conversion est activé et que l'outil acquiert une forme de surface d'outil, qui correspond à une forme finale qui est transférée à la couche centrale.
